# EUROPEAN PATENT APPLICATION

(11) **EP 1 383 269 A1**
(43) Date of publication of application: **21.01.2004**
(21) Application number: 03077227.1
(22) Date of filing: 16.07.2003
(51) Int. Cl.: H04L 12/14, H04L 12/28, H04L 29/06, H04M 15/00, G06F 19/00

(54) **Method and system for controlled online access from a terminal user to a content service**

(30) Priority: 19.07.2002 EP 02078003; 23.12.2002 EP 02080686
(71) Applicant: Koninklijke KPN N.V., 9726 AE Groningen (NL)
(72) Inventor: Koster, Arian, 3641 GS Mijdrecht (NL); Bais, Michel Alexander, 1601 BB Enkhuizen (NL); Klok, Frederik Harm, 2645 GZ Delfgauw (NL); Korenromp, Jorik Willem Evert, 3532 GV Utrecht (NL)

(57) **Abstract**

The present invention is related to online access to content services. More specifically, a method and system for controlled access to content services (2) where a terminal user (1) can be allowed (b2) or refused (b1) access to a content service (2) and the use thereof are disclosed. The invention provides a solution to enable controlled online access from a terminal user (1) to a content service (2) wherein no time-consuming registration steps, which are also annoying to the customer, or time-consuming billing steps have to be performed, only one terminal (5) is needed by the user (1) and only one connection needs to be active at the time. The invention is particularly useful for mobile terminal users, like i-mode site customers, to get comfortable access to chargeable Internet services using a payment gateway accessible through the packet-switched GPRS network and a voice response system accessible through the circuit-switched GSM network.

## Description

### Field of the invention

The present invention is related to online access to content services. More specifically, a method and system for controlled access to content services where a terminal user can be allowed or refused access to a content service and the use thereof are disclosed.

### Background of the invention

A solution for controlled online access from a terminal user to a content service is already known where the terminal user has to provide a username and password in order to get access to the content service. When the username is not known or when the password is invalid the user will be denied access. A disadvantage of this solution is that a username and password need to be registered. This implies that the terminal user and the content provider need to perform a registration step, which is time consuming and annoying.

For chargeable content services the terminal user can also be denied access based on a billing account for that user. Known solutions based on this principle have a disadvantage in that, when the billing account does not exist or when the billing account has insufficient balance, the terminal user has to perform an additional step to create a new billing account or to update its balance. Again this additional step is time consuming and annoying.

Another solution for controlled online access to chargeable content services is known from WO 97/01920. This invention is based on the idea that an access from a user's data terminal to a chargeable service is offered to the user for the time period during which a connection exists from the user's telephone to a predetermined telephone number. A disadvantage of this solution is that the user needs two devices, namely a data terminal and a telephone, to be allowed access to a content service. Another disadvantage of this solution is that two connections are needed at the same time, namely the telephone connection to allow access and the data connection to use the content service. There are numerous situations where the user is not able to have two connections at the same time. An example of this is a user having only one connection to a POTS (Plain Old Telephony System) and this one connection is used for both telephony and Internet access, but not at the same time. Another example is a user in a mobile telecommunications network, e.g. a GSM/GPRS network, where the mobile terminal can make a telephone connection via GSM and a data connection via GPRS, but not at the same time because of limitations of the user's terminal.

Yet another solution for controlled online access to chargeable content services is known from http://www.audiotext.nl/newsite/betaalgateway_imode.htm. In this solution activating a number, i.e. a second code in the present invention, by a customer on an i-mode site, activates a payment gateway, called a first system in the present invention. In a dialog with a voice response application, i.e. a second system in the present invention, the customer receives an access code. This access code has to be entered on the i-mode site. Next the gateway allows access to the chargeable content. A disadvantage of this solution is that the customer receives the access code by listening to the response of the voice response system. Often codes transmitted in this way are not caught correctly. In a next step the customer has to enter the received code on the i-mode site. This step is susceptible to typing errors. The whole procedure of receiving and entering the access code is time consuming and can be annoying to the customer.

### Problem definition

Thus the prior art fails to disclose a solution to get access from a terminal user to a content service without having to perform additional time-consuming and annoying steps or without having to use two separate devices or having to make two simultaneous connections. A solution for controlled online access from a terminal user to a content service, wherein the above mentioned additional steps are not necessary, is required for applications such as user-friendly chargeable content provisioning to terminal users in a mobile telecommunications network like GSM/GPRS.

### Aim of the invention

The aim of the invention is to provide a solution to enable controlled online access from a terminal user to a content service wherein no time-consuming registration steps, which are also annoying to the customer, or time-consuming billing steps have to be performed, only one terminal is needed by the user and only one connection can be active at the time.

### Summary of the invention

The present invention provides a solution to enable controlled online access from a terminal user to a content service wherein no time-consuming registration steps, which are also annoying to the customer, or time-consuming billing steps have to be performed, only one terminal is needed by the user and only one connection needs to be active at the time.

In the present invention controlled online access from a terminal user to a content service can be provided via a telecommunications system, the telecommunications system comprising a network, at least one terminal being connected to the network, the terminal comprising a display for displaying content services. The network can comprise a packet-switched domain and a circuit-switched domain.

A method is claimed for use in a first system, the first system being connected to a second system, but it also being possible that the first system and the second system are one and the same. The first system is connected to a means for storing billing data of terminal users. The method can comprise the following steps or a subset of the following steps:
- receiving in the first system a request from the terminal for access to the content service, said request being sent from the terminal to the first system using the network, possibly using the packet-switched domain, said request comprising a first code for identifying the terminal user and/or terminal,
- allowing or refusing online access from said terminal to said content service based on the terminal user's billing data, followed by, in case online access is refused,
- storing said first code and a second code identifying the request with the terminal user's billing data,
- providing the terminal with information to set up a connection to the second system, said information comprising the second code, said information being sent from the first system to the terminal using the network, possibly using the packet-switched domain,
- receiving in the second system said second code or related code, the second code being sent from the terminal to the second system using the network, possibly using the circuit-switched domain,
- it is possible that from the second code a telephone number of the terminal user is derived and a premium SMS message, i.e. an SMS message the receiving party has to pay for, is sent to the terminal user,
- updating the terminal user's billing data referenced by said second code, possibly by adding a sum to the terminal user's billing data, wherein said sum can e.g. correspond with a tariff of using the second network or with a tariff of the premium SMS message.
- allowing online access from said terminal to said content service, possibly on a next access request.

If the billing data of the terminal user is absent, it can be created automatically.

In case of allowance the method can optionally comprise the step of retrieving in the first system the requested content service and forwarding said requested content service to the terminal, or the step of connecting the terminal to said content service.

Note that the steps in the above-described methods of the invention do not have to be performed in the given order.

The invention also relates to a system arranged to perform the above-mentioned methods of the invention.

### Brief description of the drawings

The invention will be explained in greater detail by reference to exemplary embodiments shown in the drawings, in which:
Fig.1 shows a block diagram according to an exemplary embodiment of the invention;
Fig.2 shows a block diagram of an alternative exemplary embodiment of the invention;
Fig.3 shows a block diagram of another alternative exemplary embodiment of the invention;
Fig.4 shows a flow diagram according to an exemplary embodiment of the invention;
Fig.5 shows a flow diagram of an alternative exemplary embodiment of the invention.

### Detailed description of the invention

For the purpose of teaching of the invention, preferred embodiments of the method and system of the invention are described in the sequel. It will be apparent to the person skilled in the art that other alternative and equivalent embodiments of the invention can be conceived and reduced to practice without departing from the true spirit of the invention, the scope of the invention being only limited by the claims as finally granted.

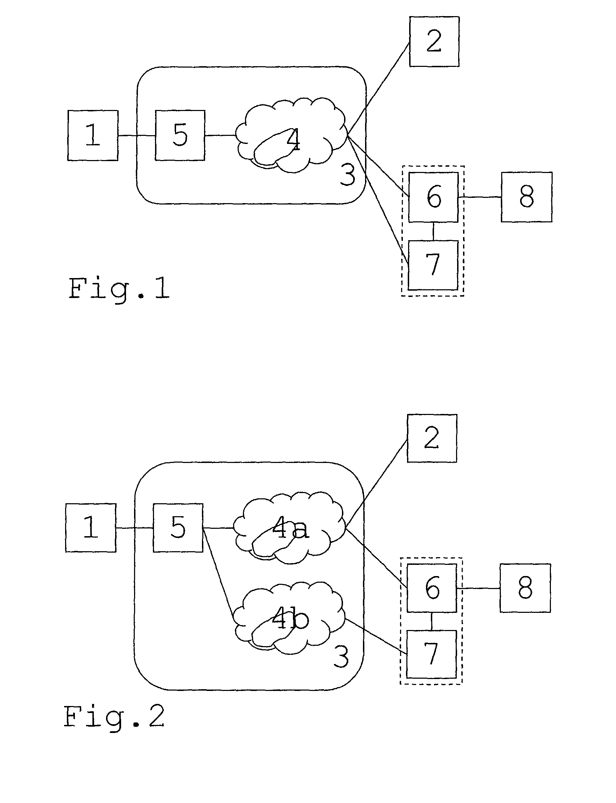

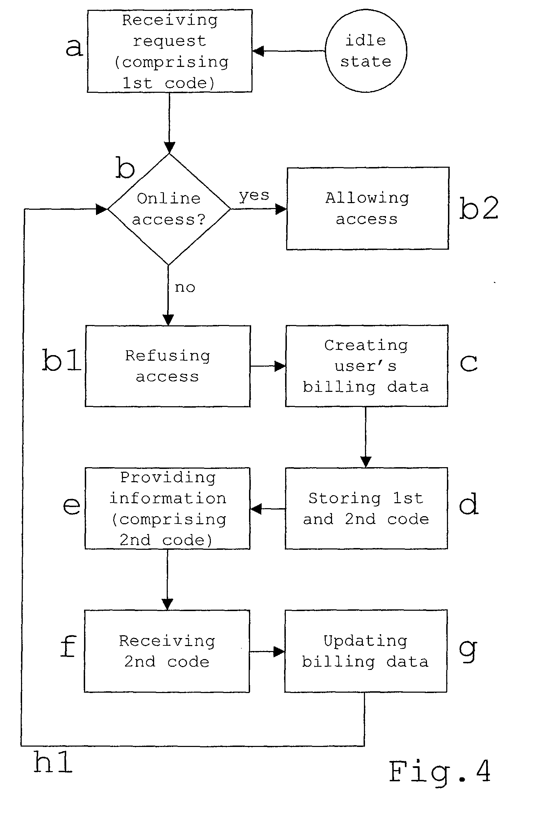

Fig.1 and Fig.4 will be referred to in the following description. A terminal user (1) wants to have access to a content service (2) via a telecommunications system (3). The telecommunications system (3) comprises a network (4) and a terminal (5). The terminal (5) is used by terminal user (1). To get access to a content service (2) the terminal user (1) sends a request to a first system (6); this request comprises a first code identifying the terminal (5) or terminal user (1). The first system (6) receives the request (a). The first system (6) decides (b) to allow (b2) or refuse (b1) access to the content service (2) based on the terminal user's billing data. Therefore a means (8) for storing billing data of terminal users is connected to the first system (6), from which the terminal user's billing data is checked. In case of refusal, the first code and the second code are stored (d) with the terminal user's data. If it is not present the terminal user's data will be created (c) first. The terminal (5) will be provided (e) with information to set up a connection to a second system (7). This information comprises a second code identifying the request from the terminal user (1). The terminal user (1) receives the information on the terminal (5) and sends the second code or a related code to the second system (7) by using the provided information. A related code can e.g. be an encrypted form of the second code or a reference to the second code. The second system (7) receives (f) the second code. The terminal (5) will be allowed access (h1)(b)(b2) now.

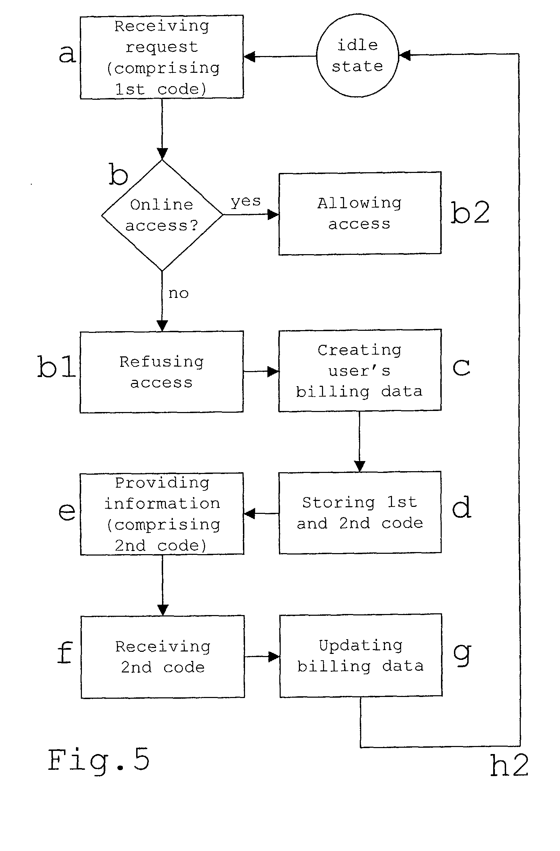

Fig.5 shows a flow diagram of an alternative exemplary embodiment of the invention, where the terminal (5) will be allowed access (h2) on a next access request (a).

Fig.2 shows a block diagram of an alternative exemplary embodiment of the invention. Here the network (2) comprises a packet-switched domain (4a) and a circuit-switched domain (4b). The terminal 5 can be connected to the first system (6) via the packet-switched domain (4a) and to the second system (7) via the circuit-switched domain (4b).

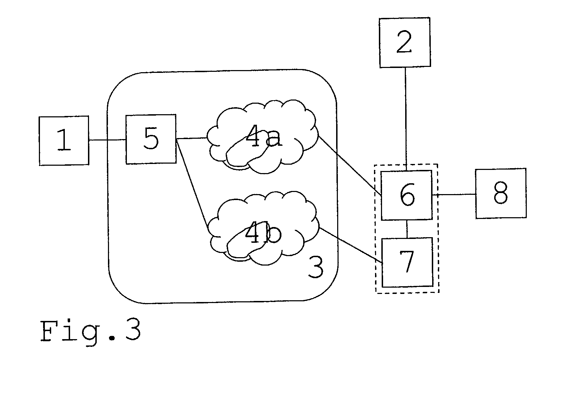

Fig.3 shows a block diagram of another alternative exemplary embodiment of the invention. The terminal (5) can be connected to the content service (2) via the first system (6).

A solution to enable controlled online access from a terminal user (1) to a content service (2) based on Fig.3 and Fig.5 will be described as an example in more detail.

In this example terminal user (1) is a mobile customer, terminal (5) is a GSM/GPRS mobile phone, the packet-switched domain (4a) is a GPRS network and the circuit-switched domain (4b) is a GSM network. The mobile phone (5) is able to display internet-like content, e.g. i-mode content. In this example a content provider offers chargeable content (2). Access to the chargeable content (2) is only possible when connecting to the content service (2) via an access system (6). When the mobile customer (1) tries to connect to the chargeable content service (2) directly, the mobile customer (1) will be redirected to the access system (6). In other words, the mobile customer (1) will get a message on the display of the mobile phone (5) that it is impossible to connect to the content service (2) directly, and will be provided a new link which should be used to connect to the content service (2). This link can be used as a first request (a) as mentioned in Fig.5.

Now the mobile customer (1) can make a valid request (a) to access the chargeable content service (2). Together with the request a first code for identification is sent to the access system (6). This identification can be used to identify the mobile customer. Examples of this type of identification are Mobile Subscriber ISDN number (MSISDN), International Mobile Subscriber Identification (IMSI) and ICC Identification (ICCID). These identifications are stored on the SIM card of the mobile customer (1), which is inserted into the mobile phone (5). Another example of a way to identify the mobile customer is to use a randomly created code, which is generated in the access system (6) and sent to the mobile phone (5) prior to the valid request (a) to access the chargeable content service (2) as described above. A randomly generated code can be used to identify the customer during the current session, i.e. as long as the mobile phone (5) is connected to the access system (6). Instead of identifying the mobile customer it is also possible to identify the mobile phone by the International Mobile Equipment Identity (IMEI) that is stored in the mobile phone (5).

To have the mobile terminal (5) send the identification to the access system (6) the compact HTML (cHTML) language can be used. A link on a cHTML page to request access to a chargeable content service (2) including identification looks like this:
<a href="link to request content service" utn>
Adding the utn tag enables transmitting the IMEI+ICCID in the HTTP header from the mobile phone (5) to the access system (6). The HTTP header is sent from the mobile terminal (5) to the access system (6) via the GPRS domain (4a).

In case based on billing data of the mobile customer (8) access to the content service (2) is refused (b1), e.g. when there is not enough balance or no billing data at all, a second code will be generated at the access system (6). This second code will be used to identify the requested content service (2). Together with the first code identifying the mobile customer the second code identifying the requested service is stored (d) with the mobile customer's billing data (8), e.g. this can be done by using the Lightweight Directory Access Protocol (LDAP). If it is the first time that the mobile customer (1) requests access to a chargeable content service (2) via the access system (6) the mobile customer's billing data (8) can be absent. In this case the mobile customer's billing data (8) can be created automatically first (c).

Next the access system (6) sends (e) a new cHTML page to the mobile phone (5) via the GPRS domain (4a). On this cHTML page there can for example be information about the costs of the requested content service and a clickable button to connect to the second system (7) (in this example a Voice Response System (VRS) capable of receiving Dual Tone Multi-Frequency (DTMF) tones) and send the second code. The link to the Voice Response System looks like this:
<a href="NoDTMFSupport.html" cti="123456789/12345">
If the mobile phone (5) doesn't support sending DTMF a page NoDTMFSupport.html will be requested, resulting in not being able to receive the requested content service (2). If DTMF is supported the cti tag will have the mobile phone call the telephone number 123456789. This telephone number corresponds with the Voice Response System (7). When a connection from the mobile phone (5) to the Voice Response System (7) via the GSM domain (4b) is made, the second code identifying the requested content service (in this example the second code equals 12345) is sent by using DTMF.

When the second code is received (f) the mobile customer's billing data (8) containing the stored (d) second code is looked up, e.g. by using LDAP, and the mobile customer's billing data (8) is updated (g). This updating (g) can for example mean that a counter indicating a number of allowed accesses is increased, or a specific amount of time that the mobile customer (1) is allowed to use the content service (2) is added. To have the customer pay for the requested content service a sum corresponding to a tariff of calling the Voice Response System, e.g. by using a premium 0900 number costing EUR 1,00 per call, is added. Alternatively from the second code the telephone number of the mobile customer, i.e. the MSISDN, could be derived and a premium SMS message, i.e. an SMS message the receiving party (the mobile customer) has to pay for, is sent to the mobile customer. Deriving can mean that the MSISDN is part of the second code or that it is encrypted in the second code. It could also be that with the second code a database containing the MSISDN is queried.

On a next request from the mobile customer (1) to access the content service (2) access will be allowed (b2) because the mobile user's billing data (8) indicates that, e.g., there is enough balance now.

Allowing access (b2) to the requested content service (2) can be achieved by using a proxy server, which can be part of the access system (6). The proxy server retrieves the requested content service (2) and forwards it to the mobile phone (5). When the mobile customer's billing data (8) indicates that access is not allowed anymore, e.g. because a time limit is reached, the proxy server can block access to the content service (2) and start the refusing access step (b1) of the invention.

Allowing access (b2) can also be achieved by using a firewall, which can be part of the access system (6). In this case if the mobile customer (1) is allowed access (b2) a firewall rule should be set to allow connection to the content service (2). In case of refusing access (b1) the firewall rule should be set to refuse connection to the content service (2), resulting in a "page not found" error on the mobile phone (5).

The example above clearly shows that the aim of the invention is reached. The access system (6) enables controlled online access from the mobile customer (1) to a content service (2). No time consuming and annoying registration or registration steps have to be performed, instead the mobile customer (1) can access the requested content service (2) just by clicking the appropriate links, to pay and next to get access. Both steps are possible using just one mobile phone. Only one connection is active at the time because the GPRS connection and GSM connection are made sequentially.

## Claims

1. Method for providing controlled online access from a terminal user (1) to a content service (2) via a telecommunications system (3), the telecommunications system (3) comprising a network (4), at least one terminal (5) being connected to the network (4), the terminal (5) comprising a display for displaying content services (2), said method for use in a first system (6), the first system (6) being connected to a second system (7), the first system (6) being connected to a means (8) for storing billing data of terminal users (1),
the method comprising the following steps:
receiving (a) in the first system (6) a request from the terminal (5) for access to the content service (2), said request being sent from the terminal (5) to the first system (6) using the network (4), said request comprising a first code for identifying the terminal user (1) and/or terminal (5),
allowing (b2) or refusing (b1) online access from said terminal (5) to said content service (2) based on the terminal user's billing data, in case of refusal (b1),
storing (d) said first code and a second code identifying the request with the terminal user's billing data,
providing (e) the terminal (5) with information to set up a connection to the second system (7), said information comprising the second code, said information being sent from the first system (6) to the terminal (5) using the network (4),
receiving (f) in the second system (7) said second code or related code, the second code being sent from the terminal (5) to the second system (7) using the network (4),
updating (g) the terminal user's billing data referenced by said second code,
allowing (h1;b;b2) online access from said terminal (5) to said content service (2).

2. Method according to claim 1 wherein allowing online access from said terminal (5) on a next access request (h2)

3. Method according to claims 1-2 wherein the method further comprises the following steps:
deriving from the second code a telephone number of the terminal user (1),
sending a premium SMS message to the terminal user (1) using the telephone number of the terminal user (1).

4. Method according to claims 1-3 wherein said means (8) for storing billing data of terminal users is part of the first system (6).

5. Method according to claims 1-3 wherein said means (8) for storing billing data of terminal users is part of the second system (7).

6. Method according to claims 1-4 wherein said first system (6) and said second system (7) are the same.

7. Method according to any of the claims 1-6 wherein said network (4) comprises a packet switched domain (4a) and a circuit switched domain (4b).

8. Method according to claim 7 wherein said request is sent from the terminal (5) to the first system (6) using the packet switched domain (4a) .

9. Method according to claims 7-8 wherein said information is sent from the first system (6) to the terminal (5) using the packet switched domain (4a).

10. Method according to any of the claims 7-9 wherein said second code is sent from the terminal (5) to the second system (7) using the circuit switched domain (4b).

11. Method according to claims 1-10 wherein updating (g) the terminal user's billing data is accomplished by adding a sum to the terminal user's billing data.

12. Method according to claim 11 wherein said sum corresponds with a tariff of using the second system (7).

13. Method according to claims 3-10 wherein updating (g) the terminal user's billing data is accomplished by adding a sum to the terminal user's billing, said sum corresponding with a tariff of the premium SMS message.

14. Method according to claims 1-13 wherein, if said terminal user's billing data is absent, the terminal user's billing data is created (c) automatically.

15. Method according to any of the claims 1-14 wherein the method further comprises the following steps:
in case of allowance (b2),
retrieving in the first system (6) the requested content service,
forwarding said requested content service (2) to the
terminal (5).

16. Method according to any of the claims 1-14 wherein the method further comprises the following step:
in case of allowance (b2),
connecting the terminal (5) to said content service (2).

17. A system arranged to perform the methods according to any of the preceding claims.
